# EUROPEAN PATENT SPECIFICATION

(11) **EP 1 366 201 B1**
(45) Date of publication and mention of the grant of the patent: **28.12.2005**
(21) Application number: 02703647.4
(22) Date of filing: 08.03.2002
(51) Int. Cl.: C22B 3/08

(54) **A METHOD FOR THE REMOVAL OF CALCIUM FROM A ZINC PROCESS SULFATE SOLUTION**
VERFAHREN ZUR ABTRENNUNG VON CALCIUM AUS EINER SULFATLÖSUNG AUS EINEM ZINKPROZESS
PROCEDE D'EXTRACTION DU CALCIUM CONTENU DANS UNE SOLUTION DE SULFATE DESTINEE AU TRAITEMENT DU ZINC

(30) Priority: 09.03.2001 FI 20010475
(43) Date of publication of application: 03.12.2003
(73) Proprietor: Outokumpu Technology Oy, 02200 Espoo (FI)
(72) Inventor: TALONEN, Panu, FIN-67600 Kokkola (FI)
(74) Representative: Zipse + Habersack
(86) International application number: PCT/FI2002/000181
(87) International publication number: WO 2002/072895

(56) References cited:
- WO-A1-99/32675
- US-A- 3 961 908
- US-A- 4 423 012
- US-A- 4 834 793
- US-A- 5 820 966
- US-A- 5 902 474

## Description

This invention relates to a method for removing calcium from a sulfate solution in the zinc production process. Calcium is removed as an anhydrite from the raw solution coming from concentrate or ore leaching before the solution purification stages.

Calcium may enter hydrometallurgical process solutions along with the concentrate or ore fed into the process as raw material. Another alternative is that the calcium enters the solution from the dissolution of lime used in process solution neutralization. In that case the situation often arises at some process stage that the solution is over-saturated with regard to gypsum and that gypsum starts to precipitate onto the process equipment.

Sulphidic zinc concentrates or ores are generally processed either by roasting the concentrate first into oxidic form and leaching the generated calcine using a sulfuric acid solution from zinc electrolysis in order to obtain a zinc sulfate solution, or by routing the sulphidic concentrate or oxidic ore directly to leaching without roasting. The zinc sulfate solution obtained from leaching is known as the raw solution, which is purified from other metals and impurities in various stages of solution purification before being routed to electrolysis for the production of pure zinc. The iron contained in the concentrate and ore remains insoluble and forms an iron precipitate, which can be jarosite, goethite or hematite and which is removed from the leaching cycle.

There can be from about 0.04 - 0.4 % calcium in sulphidic zinc concentrates, with the average being of the order of 0.3%. Average contents of oxidic zinc ores may be even higher. Even if the calcium content of the concentrate or ore is only average, the situation often arises where the process solution is saturated in gypsum after the leaching stage. Since the temperature in post-leaching solution purification is clearly lower, it causes a drop in the solubility of gypsum and thus the risk of precipitation onto both process equipment and the solids present in the process. For instance in cobalt precipitation, which is one stage of solution purification, the precipitating gypsum accumulates in the cobalt sediment, disturbing the process itself and the further processing of the sediment. Since the solutions circulate in the process, there is also calcium present in the sulfuric acid solution, known as return acid, which is used in concentrate or ore leaching.

The raw solution coming from leaching has a temperature of around 75 - 100°C. Before the electrolysis stage, impurities that could affect the quality of the zinc or the electricity consumption of the electrolysis have to be removed from the raw solution. This is done in several, usually three separate solution purification stages. If the solution is got to cool down too much in these stages, gypsum may start to precipitate out from the solution, harming the process itself and causing extra maintenance costs. In order to avoid gypsum precipitation, the solution purification stages have to be performed at a high enough temperature, and this temperature requirement is considered a significant limitation on the use and development of the various stages.

As mentioned above, in addition to the raw material calcium accumulates in zinc process solutions from the lime used in solution neutralization. Lime is used for example to remove magnesium and sulfate from process solutions, particularly from the acid solution returning from electrolysis. In this process stage the solution is neutralized with lime so that the metals contained in the solution, with the exception of magnesium, are precipitated out as hydroxides. At the same time, gypsum is precipitated. The magnesium sulfate solution thus obtained is routed out of the process. The remaining slurry, containing zinc hydroxide and gypsum, is returned to the process. The effect of this slurry on the calcium content of the process solution depends largely on the point at which the slurry is returned to the process.

In zinc processes gypsum is generally removed after solution purification by cooling the solution to about 40°C in the presence of gypsum nuclei. This is a natural answer, since the solution has in any case to be cooled before going to electrolysis. When the precipitated gypsum is circulated as precipitation nuclei back to the cooling stage, the calcium content of the solution attains a level that does not cause problems in electrolysis. The difficulty with a calcium removal step after solution purification, however, is the fact that the high calcium content of the raw solution may cause problems already in the solution purification stage. Gypsum precipitation due to the high calcium content of the raw solution increases maintenance requirements for the piping and equipment. If we wish to remove calcium as gypsum before solution purification, it requires cooling of the raw solution for precipitation and reheating for the solution purification stages. Besides, the cooling of the raw solution may also cause the precipitation of zinc sulfate, which is in no way desirable.

Calcium is usually removed from a sulfate solution as gypsum, CaSO₄·2H₂O. Calcium sulfate does however have two other forms, where the amount of crystal water is different: hemihydrate CaSO₄·0,5H₂O and anhydrite CaSO₄, which is the anhydrous form of calcium sulfate. The solubility of hemihydrate is so great, at least at temperatures under 100°C, that its appearance in zinc processes is not likely. The solubility of gypsum grows as the temperature rises, in other words a zinc concentrate or ore leaching temperature as described above produces 600-850 mg/l calcium in the solution, which precipitates as gypsum as the temperature falls, because the solubility of gypsum in this case falls. The solubility of anhydrite on the other hand falls as the temperature rises and is smaller than the solubility of gypsum for example at the temperatures of the zinc process leaching and solution purification stages.

A method has now been developed for the removal of dissolved calcium from zinc sulfate solutions so that the calcium dissolved in process solutions is removed as anhydrite, instead of the normal gypsum precipitation. An iron-containing zinc raw material such as zinc concentrate, ore or calcine is leached in a sulfuric acid solution in order to obtain a raw solution containing zinc sulfate. The solution obtained is routed to electrolysis after the solution purification stages, and the iron is precipitated out from the process as jarosite, goethite or hematite. Calcium precipitation is preferably performed from the raw solution before the solution purification stages. As stated above, the temperature of the raw solution coming from leaching is so high (75 - 100°C), that it is suitable for anhydrite precipitation and in this way the problems of gypsum formation in the various stages of solution purification are avoided. The precipitation of calcium as anhydrite is aided by the use of anhydrite crystals as crystal nuclei. The essential features of the invention will become apparent in the attached claims.

The method of the invention is illustrated with the attached drawings, where
Figure 1 is a graphical representation of the balance solubilities of gypsum and anhydrite obtained by calculation based on thermodynamic values for a typical raw solution from zinc concentrate leaching as a function of temperature,
Figure 2 is a graphical representation of the effects of gypsum and anhydrite crystals on a typical raw solution from zinc concentrate leaching as a function of time at a temperature of 85°C,
Figure 3 shows a flow sheet of the part of the zinc process concerning calcium precipitation,
Figure 4 is a graphical representation of the effect of anhydrite on the calcium content of a zinc sulfate solution at different temperatures as a function of time, and
Figure 5 is a graphical comparison of the effect of gypsum and anhydrite on the calcium content of a zinc sulfate solution as a function of time.

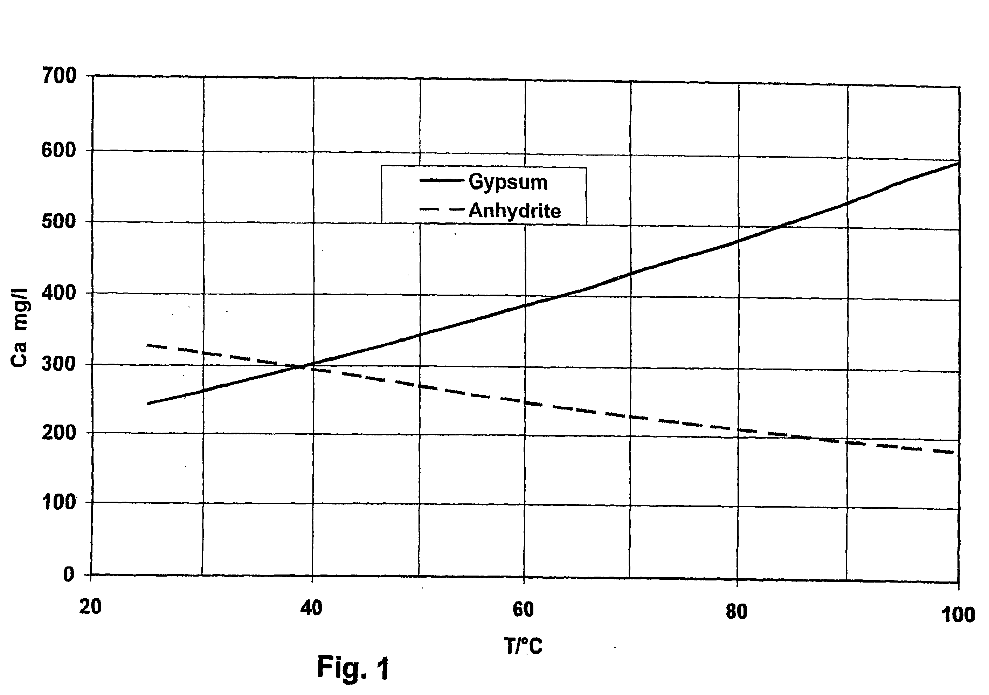

The method of calcium removal according to the present invention is based on the fact that anhydrite crystals are mixed into the impure, hot zinc sulfate solution i.e. raw solution, obtained from the leaching of zinc calcine or concentrate (or oxidic ore). The anhydrite crystals act as precipitation nuclei, and the calcium content of the solution tends to set to correspond with the solubility of anhydrite. As shown in Figure 1, the solubility of anhydrite is smaller than that of gypsum i.e. using this method a solution is obtained from which it is no longer attempted to precipitate gypsum at the solution purification stage. The calcium content of the solution to be obtained depends on the reaction time and the available surface area of the anhydrite. Use of this method attains a calcium content of the same order as the usual calcium removal occurring after solution purification, where calcium is removed as gypsum. In practice, a suitable limit has proved to be 400 - 500 mg Ca/l.

Although the solubility of anhydrite in a zinc sulfate solution at high temperatures is smaller than that of gypsum, in practice the calcium level of a process solution seems to settle according to the solubility of gypsum. The reason for this is probably that the formation of anhydrite crystals is prevented kinetically, in other words the reaction is in practice too slow. The formation of gypsum nuclei on the other hand is possible, and the gypsum crystals generated control the solution according to the solubility of gypsum. The situation can however be regulated by adding anhydrite crystals to the solution.

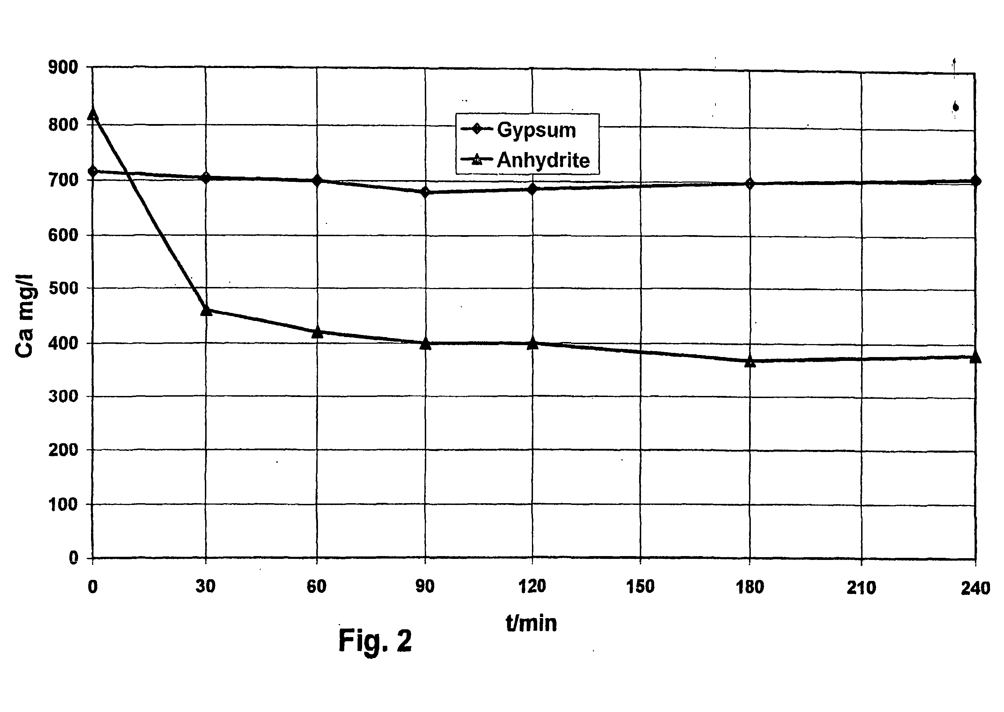

Figure 2 presents the effect of gypsum and anhydrite crystals on the calcium content of an ordinary raw solution coming from zinc concentrate leaching, when the temperature is 85°C and the solids content 50 g/l. Although the solubility of anhydrite is smaller than that of gypsum, the calcium content of the solution did not settle at a level corresponding to the solubility of anhydrite in tests where gypsum crystals were added to the solution. Instead, when using anhydrite crystals, the calcium content of the solution quickly obtained a level below 500 mg/l. This level can be considered quite safe for solution purification. It is also clear from the figure that at the temperature in question calcium removal from the raw solution is already rather effective in the presence of anhydrite crystals.

In zinc process raw solution treatment conditions anhydrite is the most stable form of calcium sulfate. Therefore there is no fear that the long residence time of the solids could change the anhydrite into other phases. This is also supported by results from production-scale operation: the calcium present in the sediment recycled in cobalt removal and thus resident in the process for a long time is in fact in anhydrite form.

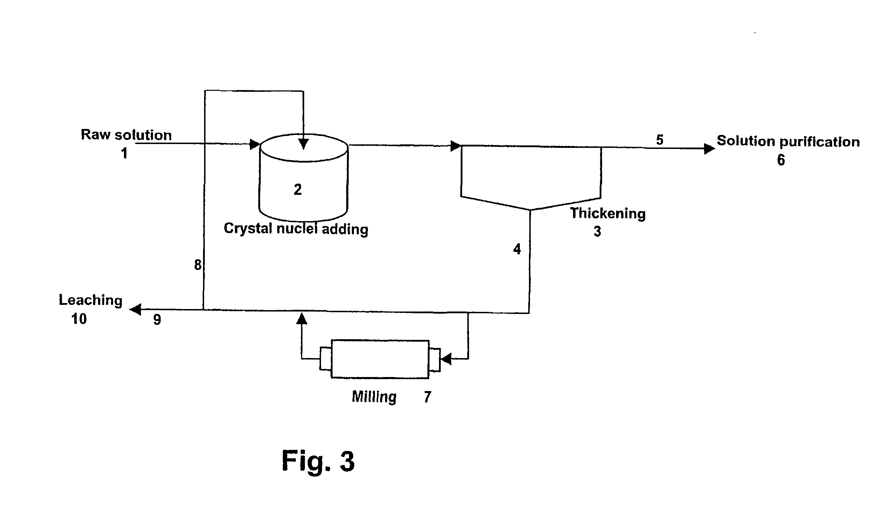

Figure 3 presents a method for the removal of calcium from a zinc process according to the invention as a flow sheet. The raw solution 1 with a temperature of 75 - 100°C, coming from zinc concentrate or calcine leaching, is taken to a mixing tank 2, where anhydrite crystal nuclei are also added. The residence time of the solution in the tank depends on the surface area of the anhydrite crystals. The solution is routed from the mixing tank to a thickener 3, where the crystallized anhydrite is separated from the solution as underflow 4 and the clarified solution is routed as overflow 5 to solution purification 6. After solution purification the zinc sulfate solution is routed to electrolysis for the preparation of elemental zinc (not shown in detail in the drawing). The thickener underflow, a solid-containing slurry, now contains anhydrite crystals, which may be ground for example by milling in stage 7 in order to increase the surface area of the crystals. The formation of anhydrite crystals directly from the solution is a slow reaction, so that at least part 8 of the anhydrite formed is recirculated to the mixing tank 2 and preferably further via milling 7, where the particle size can be controlled and new secondary crystal nuclei are produced. That part 9 of the thickener underflow which is not recirculated to the mixing tank 2 as an addition of crystal nuclei, is routed back for example to calcine or concentrate leaching 10, from where it goes with iron into the iron precipitate and is removed from the leaching cycle (not shown in detail in the drawing).

The advantage of the method now developed is that the calcium content of the raw solution coming from leaching can be lowered without cooling to a level that facilitates the operation of the solution purification stages without disturbances caused by gypsum. At the same time the amount of gypsum precipitating on the process equipment is also reduced. When the calcium content of the raw solution can be made small enough in this way before solution purification, the process designer and user have more opportunities to decide on the temperature of the different stages of solution purification. This also provides an opportunity for the development of new methods in solution purification.

The invention is illustrated further by the following examples:

### Example 1

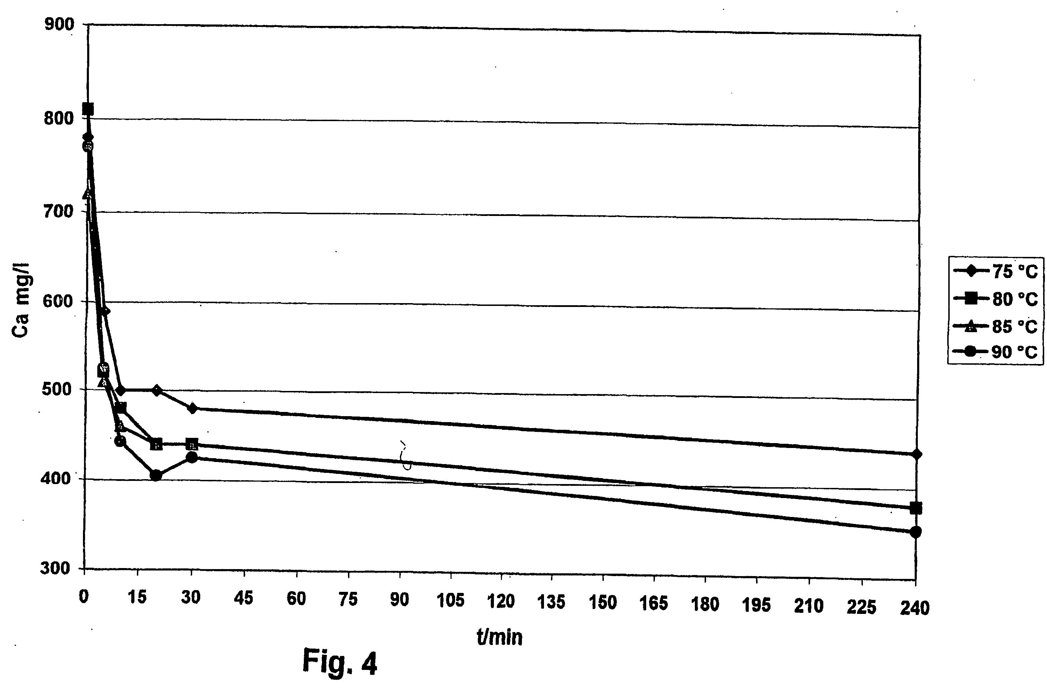

Tests were made to investigate the effect of anhydrite on the calcium content of a zinc sulfate solution. A raw solution of a zinc plant using the sulfate process included the following substances: Zn 158 g/l, Mg 10 g/l, Mn 5 g/l, NH₄⁺ 3 g/l and Ca 0.7 g/l. The raw solution was heated in separate tests to a temperature of 75, 80, 85 and 90°C. At each temperature the saturation of the solution with regard to gypsum was checked by adding to the hot solution first 1 g/l calcium hydroxide Ca(OH)₂ and then sulfuric acid solution until the pH of the hot solution reached a value of 4.0. After this, 50 g/l of anhydrite crystals were added to each solution. The starting point of the test is the addition of anhydrite, and the corresponding calcium contents were measured just before the anhydrite addition. The results are shown graphically in Figure 4 as a function of time. The graph shows that the lowest calcium content was achieved at a temperature of 90°C, but that also in every other case the Ca content of the solution had dropped within only half an hour to a level that does not cause problems in solution purification.

### Example 2

A sulfate-based zinc process raw solution was used as in example 1 and the effect of anhydrite and gypsum on the calcium content of zinc sulfate was compared at temperatures of 80 and 85°C. The solutions were heated in separate tests to the above-mentioned temperatures, and 1 g/l calcium hydroxide Ca(OH)₂ and then sulfuric acid solution was added to each solution, until the pH of the hot solution reached a value of 4.0. 50 g/l of either anhydrite or gypsum crystals were then added. The moment of addition was the starting point of the test and the representative calcium content was measured just before the addition of the anhydrite or gypsum crystals.

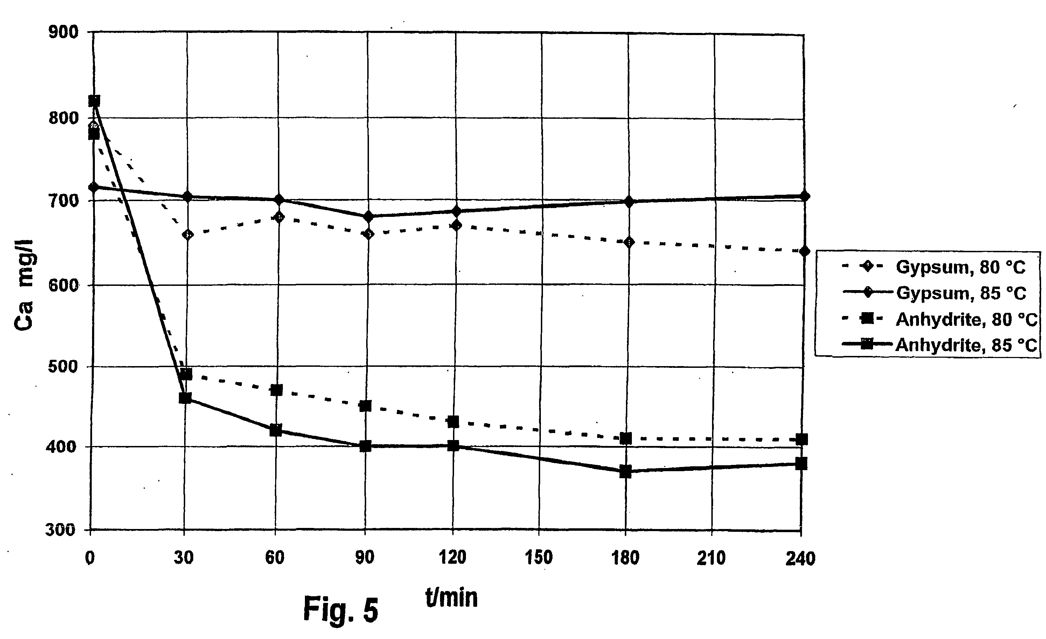

The effects of gypsum and anhydrite on the calcium content of a zinc sulfate solution are shown in Figure 5, where the calcium content of the solution is given graphically as a function of time. The graph shows that when using gypsum crystals the calcium content of the solution remains at a level of 650 - 720 mg/l, whereas within 4 hours of the addition of anhydrite crystals it may drop to a value of 370 - 420 mg/l. It is also evident that by precipitating the calcium in the raw solution as anhydrite the calcium level of the raw solution can be reduced to sufficiently low levels before solution purification. In this way the problems of precipitation in solution purification can be avoided while at the same time giving the opportunity to modify solution purification stages.

## Claims

1. A method for the removal of calcium from a sulfate solution in a zinc production process, whereby an iron-containing zinc raw material such as zinc concentrate, ore or calcine is leached into a sulfuric acid solution in order to obtain a raw solution, where said solution is routed to electrolysis after solution purification stages, and the iron is precipitated out from the process, **characterized in that** the calcium is precipitated from the raw solution as anhydrite in the presence of anhydrite crystals at a temperature between 75 - 100°C.

2. A method according to claim 1, **characterized in that** the calcium is precipitated from the raw solution before going to solution purification.

3. A method according to claim 1, **characterized in that** the anhydrite crystals formed in calcium precipitation are separated from the raw solution and that part of the solid-containing slurry including the crystals, is circulated back to the calcium precipitation stage.

4. A method according to claim 3, **characterized in that** the anhydrite crystals are ground before their return to the calcium precipitation stage.

5. A method according to claim 3, **characterized in that** part of the solid-containing slurry including anhydrite crystals is routed to calcine or concentrate leaching.

6. A method according to claim 5, **characterized in that** the anhydrite is removed from the leaching cycle in conjunction with the iron precipitation.

## Patentansprüche

1. Verfahren zur Abscheidung von Kalzium aus einer Sulfatlösung in einem Zinkherstellungsverfahren, wobei ein eisenhaltiges Zinkrohmaterial, wie beispielsweise Zinkkonzentrat, Erz oder Rösterz zum Erhalten einer Roh-Lösung in eine Schwefelsäure-Lösung gelaugt wird, welche Roh-Lösung nachfolgend zu Lösungs-Reinigungsstufen einer Elektrolyse zugeführt wird, und das Eisen aus dem Prozess ausgefällt wird,
**dadurch gekennzeichnet, dass** das Kalzium aus der Roh-Lösung als Anhydrit in Form von Anhydritkristallen bei einer Temperatur zwischen 75 - 100 ° C ausgefällt wird.

2. Verfahren nach Anspruch 1,
**dadurch gekennzeichnet, dass** das Kalzium aus der Roh-Lösung vor dem Durchführen einer Lösungs-Reinigung ausgefällt wird.

3. Verfahren nach Anspruch 1,
**dadurch gekennzeichnet, dass** die in dem Kalziwn-Ausfällungsverfahren gebildeten Anhydrit-Kristalle aus der Roh-Lösung separiert werden, und dass ein Teil der Feststoffe enthaltenden Aufschlämmung einschließlich der Kristalle, in die Kalzium-Ausfällungsphase rückgeführt wird.

4. Verfahren nach Anspruch 3,
**dadurch gekennzeichnet, dass** die Anhydritkristalle vor ihrer Rückführung in die Kalzium-Ausfällungsphase zermahlen werden.

5. Verfahren nach Anspruch 3,
**dadurch gekennzeichnet, dass** ein Teil der Feststoffe enthaltenden Aufschlämmung einschließlich der Anhydritkristalle, einer Rösterz- oder Konzentratauslaugung zugeführt wird.

6. Verfahren nach Anspruch 5,
**dadurch gekennzeichnet, dass** das Anhydrit aus dem Auslaugungszyklus in Verbindung mit der Eisen-Ausfällung abgeschieden wird.

## Revendications

1. un procédé d'extraction du calcium d'une solution de sulfate dans un procédé de production de zinc, où un matériau brut de zinc contenant du fer, tel un concentré de zinc, un minerai ou calcinat est lixivié dans une solution d'acide sulfurique afin d'obtenir une solution brute, où ladite solution est dirigée vers une électrolyse après les étapes de purification de la solution, et le fer est précipité hors du traitement, **caractérisé en ce que** le calcium est précipité de la solution brute comme anhydrite en présence de cristaux d'anhydrite à une température située entre 75 - 100°C.

2. Un procédé selon la revendication 1, **caractérisé en ce que** le calcium est précipité de la solution brute avant d'aller à la purification de la solution.

3. Un procédé selon la revendication 1, **caractérisé en ce que** les cristaux d'anhydrite formés dans la précipitation de calcium sont séparés de la solution brute et **en ce qu'**une partie de la boue contenant une matière solide contenant les cristaux est redirigée vers l'étape de précipitation.

4. Un procédé selon la revendication 3, **caractérisé en ce que** les cristaux d'anhydrite sont moulus avant leur retour à l'étape de précipitation du calcium.

5. Un procédé selon la revendication 3, **caractérisé en ce qu'**une partie de la boue contenant de la matière solide contenant des cristaux d'anhydrite est dirigée vers une lixiviation de calcinat ou de concentré.

6. Un procédé selon la revendication 5, **caractérisé en ce que** l'anhydrite est retiré du cycle de lixiviation en liaison avec la précipitation de fer.
